# EUROPÄISCHE PATENTSCHRIFT

(11) **EP 0 769 591 B1**
(45) Veröffentlichungstag und Bekanntmachung des Hinweises auf die Patenterteilung: **01.03.2000**
(21) Anmeldenummer: 96116395.3
(22) Anmeldetag: 12.10.1996
(51) Int. Cl.: E03C 1/33

(54) **Befestigungsvorrichtung für einen Geräteeinsatz**
Device for connecting an apparatus to a work top
Dispositif pour fixer un appareil dans un plan de travail

(30) Priorität: 17.10.1995 DE 19538562; 04.11.1995 DE 19541203
(43) Veröffentlichungstag der Anmeldung: 23.04.1997
(73) Patentinhaber: Mecano Rapid GmbH, 69123 Heidelberg (DE)
(72) Erfinder: Demel, Otto, 69124 Heidelberg (DE); Dolch, Gernot, 69126 Heidelberg (DE); Huck, Thomas, 69307 Sandhausen (DE); Weiner, Heiko, 69509 Mörlenbach (DE)
(74) Vertreter: Gornott, Dietmar, Dipl.-Ing.

(56) Entgegenhaltungen:
- DE-A- 3 325 345
- DE-A- 3 915 325

## Beschreibung

Die Erfindung betrifft eine Befestigungsvorrichtung für einen Geräteeinsatz, der in die Einbauöffnung einer Tragplatte einsetzbar ist, mit seinem Rand auf deren Oberfläche aufliegt und der zur Arretierung einer Vielzahl der genannten Befestigungsvorrichtungen ausgebildet ist, wobei die Befestigungsvorrichtung aus einem mit dem Geräteeinsatz verbindbaren Halteteil und einem Spannteil besteht, das von einer Transportlage in eine Befestigungslage kippbar ist und aus einem Führungsschenkel und einem dazu im wesentlichen senkrecht angeordneten Spannschenkel besteht, wobei der Spannschenkel mittels einer durch ein Loch im Spannschenkel greifenden und in einer Gewindebohrung im Halteteil gehaltenen Schraube mit der Tragplatte verspannbar ist und der Führungsschenkel von zwei Streifen gebildet wird, die zu beiden Seiten der Gewindebohrung im Halteteil geführt sind.

Zur Befestigung von Einbauspülen und anderen Geräteeinsätzen in die Einbauöffnung einer Tragplatte, insbesondere einer Küchenarbeitsplatte, sind verschiedene Vorrichtungen bekanntgeworden. Diese Vorrichtungen werden üblicherweise vom Hersteller des Geräteeinsatzes an diesem montiert. Damit ein einfaches Eintauchen in die Einbauöffnung der Tragplatte möglich ist, besitzen die bekannten Vorrichtungen schwenk- oder drehbare Krallen oder Klammern, die in einer Transportstellung nicht über die Einbauöffnung hinausragen. Nach dem Einsetzen des Geräteeinsatzes in die Tragplatte werden die Krallen oder Klammern unter den Rand der Tragplatte geschwenkt oder gedreht und mit Hilfe einer Schraube mit der Tragplatte verspannt.

Einige bekannte Bauformen dieser Befestigungsvorrichtungen weisen ein mit dem Geräteeinsatz verbundenes Halteteil auf, das mit einem Gelenk zum Schwenken des Spannteils (Kralle, Klammer) versehen ist. Eine solche Bauform ist in DE 39 15 325 A1 beschrieben. Dabei wird das Spannteil sehr einfach in Stanztechnik ausgeführt. Um die erforderliche Stabilität und Funktionalität zu gewährleisten, muß es relativ groß ausfallen. Bezüglich des Halteteils einfachere Bauformen gestatten die Schwenkbewegung des Spannteils dadurch, daß das Spannteil zumindest in der Transportstellung lediglich mit Hilfe eines Langloches und der im Halteteil feststehenden Schraube geführt wird. Eine solche Bauform ist in DE 33 25 345 C2 (entspricht dem Oberbegriff des Anspruchs 1) beschrieben. Als Spannteil wird dort ein laschenartiges Element verwendet, das insbesondere in Richtung auf den Geräteeinsatz relativ viel Platz beansprucht.

Aufgabe der vorliegenden Erfindung ist es, eine Befestigungsvorrichtung der eingangs genannten Art anzugeben, welche wenig Platz beansprucht und bei möglichst geringem Verbrauch an Werkstoff die erforderliche Stabilität aufweist. Außerdem soll die Vorrichtung leicht montierbar sein.

Diese Aufgabe wird erfindungsgemäß dadurch gelöst, daß das Spannteil im wesentlichen T-förmig gebogen ist, daß der Führungsschenkel in der Befestigungslage in seiner gesamten Länge parallel zur Schraube verläuft und daß das Spannteil im Übergangsbereich zwischen dem Spannschenkel und dem Führungsschenkel eine Biegung von etwa 90° und eine Biegung von etwa 180° aufweist.

Durch die kompakte Gestaltung des Übergangsbereichs zwischen den Schenkeln des Spannteils kann unter Beibehaltung einer ausreichenden Stabilität auch die Abmessung der gesamten Befestigungsvorrichtung, d. h. des Spannteils und des Halteteils, quer zur Schwenkrichtung gegenüber den bekannten Befestigungsvorrichtungen verringert werden. Je nach Ausgestaltung des Halteelementes im einzelnen kann die erfindungsgemäße Befestigungsvorrichtung für Geräteeinsätze aus Metall oder aus Kunststoff verwendet werden.

Eine Weiterbildung der erfindungsgemäßen Befestigungsvorrichtung für einen Geräteeinsatz, der eine in die Einbauöffnung ragende umlaufende Randleiste zur Arretierung der Befestigungselemente aufweist, die im arretierten Zustand von zwei Schenkeln des Halteteils umfaßt wird, besteht darin, daß die Gewindebohrung in dem der Tragplatte zugewandten Schenkel des Halteteils angeordnet ist. Durch diese Weiterbildung wird die Befestigungsvorrichtung gegenüber bekannten Vorrichtungen weiter an den Rand des Ausschnitts der Tragplatte gerückt, was einerseits zu einer weiteren Verkleinerung der Abmessungen, insbesondere zu einer Verkürzung des Spannschenkels, beiträgt und andererseits Raum für eine freizügigere Gestaltung des Geräteeinsatzes innerhalb der Randleiste freigibt. Außerdem werden bei dieser Weiterbildung die Spannkräfte günstiger in den Geräteeinsatz eingeführt. Schließlich weist diese Weiterbildung einen großen Spannbereich bezüglich verschiedener Stärken der Tragplatte auf.

Die Erfindung ist sowohl bei Befestigungsvorrichtungen mit einem Gelenk im Halteteil als auch bei Befestigungsvorrichtungen mit einem starren Halteteil mit Erfolg anwendbar.

Eine günstige Führung des Spannteils sowie dessen Arretierung in der Transportstellung werden in vorteilhafter Weise bei einer erfindungsgemäßen Befestigungsvorrichtung ohne Gelenk im Halteteil dadurch erzielt, daß das Loch im Spannschenkel ein Langloch ist, daß Nuten, die zur Führung der Streifen im Halteteil angeordnet sind, an ihren vom Geräteeinsatz abgewandten Enden mit jeweils einer von der Tragplatte wegweisenden Aufweitung versehen sind und daß gegenüber der Aufweitung mindestens einer der Nuten eine Federzunge vorgesehen ist, welche das Spannteil in der Transportlage hält.

Die Wirkung bezüglich der Arretierung kann bei dieser Weiterbildung dadurch unterstützt werden, daß im Übergangsbereich zwischen der Nut und der Aufweitung jeweils eine Schwelle am Boden der Nut vorgesehen ist.

Um beim Festziehen der Schraube das Spannteil in der Befestigungslage zu halten, kann bei der erfindungsgemäßen Befestigungsvorrichtung vorgesehen sein, daß das Langloch im Spannschenkel in der Verlängerung des Führungsschenkels angesenkt ist.

Um einer beim Spannen möglichen Verformung des Spannteils entgegenzuwirken, kann ferner der Spannschenkel in einem mittleren Längenbereich gegen die Tragplatte abgewinkelt sein.

Eine andere Weiterbildung der erfindungsgemäßen Befestigungsvorrichtung verhindert ein Abrutschen des Spannschenkels von der Oberfläche der Tragplatte beim Festziehen der Spannschraube dadurch, daß der Spannschenkel am Rande eines gegenüber dem Führungsschenkel liegenden Bereichs von dem Führungsschenkel wegweisend gekröpft ist und am Ende Krallen aufweist. Vorzugsweise bildet dabei der Spannschenkel mit dem Führungsschenkel im entspannten Zustand einen Winkel zwischen 70° und 85°. Ferner ist bei dieser Weiterbildung vorteilhaft, wenn die Krallen rechtwinklig zum Spannschenkel stehen.

Ausführungsbeispiele der Erfindung sind in der Zeichnung anhand mehrerer Figuren dargestellt und in der nachfolgenden Beschreibung näher erläutert. Es zeigt:
- Fig. 1: ein Ausführungsbeispiel in Befestigungsstellung,
- Fig. 2: das Halteteil eines weiteren Ausführungsbeispiels in perspektivischer Darstellung,
- Fig. 3: das eine Ausführungsbeispiel in Transportstellung an der Randleiste eines Geräteeinsatzes,
- Fig. 4: ein Spannteil,
- Fig. 5: eine Ansicht des Halteteils des weiteren Ausführungsbeispiels,
- Fig. 6: ein weiteres Ausführungsbeispiel für das Spannteil und
- Fig. 7: ein Ausführungsbeispiel einer Befestigungsvorrichtung mit dem Spannteil nach Fig. 6.

Das Halteteil 1 ist klammerartig ausgebildet mit zwei Schenkeln 2, 3, die im montierten Zustand eine Randleiste 4 des Geräteeinsatzes 5 umgreifen. Der Geräteeinsatz 5 weist Löcher 6 auf, in welche eine am Schenkel 3 befindliche Rastnase 7 jeweils eingreift.

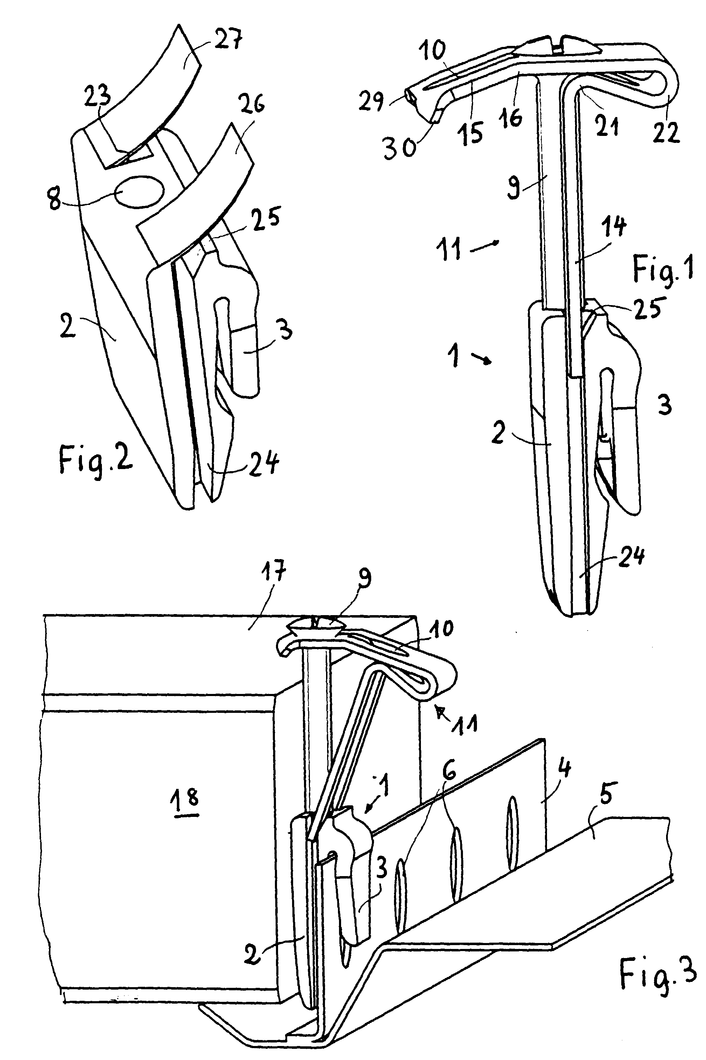

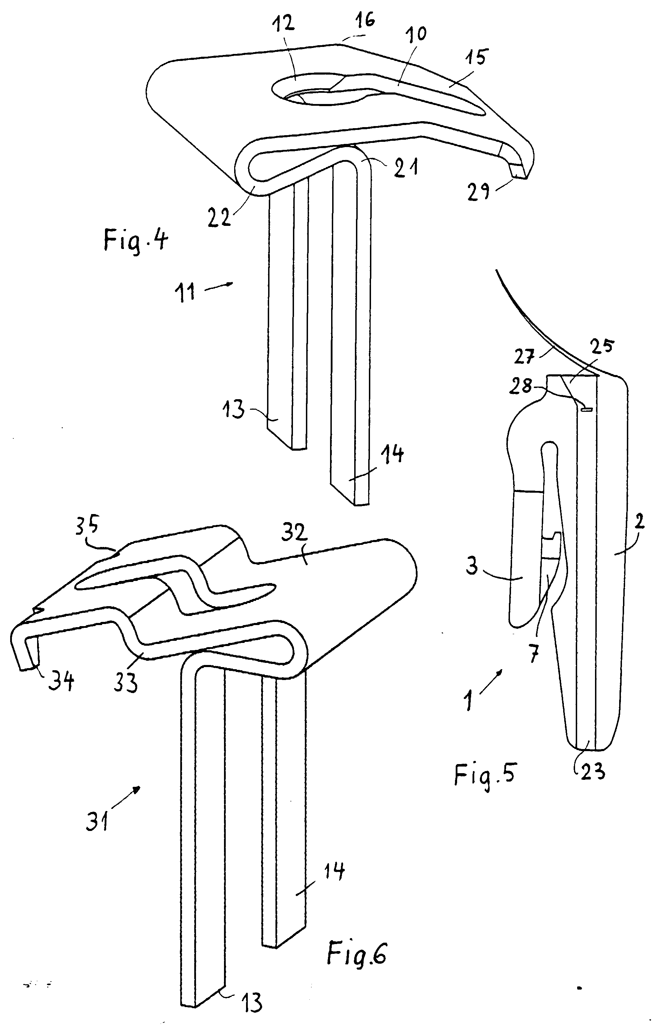

Eine Gewindebohrung 8 im Halteteil 1 nimmt eine Schraube 9 auf, welche ferner durch ein Langloch 10 im Spannteil 11 (Fig. 1, 3, 4) ragt. In der in Fig. 5 dargestellten Transportstellung befindet sich die Schraube 9 an dem einen Ende des Langloches, während in der Befestigungsstellung (Fig. 1) die Schraube das andere Ende des Langloches 10 einnimmt. Dieses Ende ist mit einer Senkung 12 versehen, um das Spannteil 11 in der Befestigungslage beim Verspannen zu arretieren.

Das Spannteil weist einen Führungsschenkel auf, der aus zwei Streifen 13, 14 besteht, und einen Spannschenkel 15, der bei 16 leicht gegen die Oberfläche 17 der Tragplatte 18 geknickt ist. Das Ende des Spannschenkels ist an den Ecken 29, 30 krallenförmig ausgebildet.

Im Übergangsbereich zwischen dem Führungsschenkel 13, 14 und dem Spannschenkel 15 erfolgt zunächst eine Biegung 21 von etwa 90° und eine Biegung 22 von etwa 180°. In dem somit von der Tragplatte 18 abgewandten Bereich des Spannteils ist das Spannteil nicht geschlitzt, was zur Festigkeit des Spannteils wesentlich beiträgt.

Die Streifen 13, 14 werden in Nuten 23, 24 des Schenkels 2 des Halteteils 1 geführt. Um ein Schwenken des Spannteils 11 unter gleichzeitiger Führung der Enden der Streifen 13, 14 zu ermöglichen, sind die Nuten am oberen Ende aufgeweitet.

Damit das Spannteil 11 während des Transports und insbesondere während des Einsetzens des Geräteeinsatzes in die Tragplatte in der Transportstellung verbleibt, sind an das Halteteil 1 des Ausführungsbeispiels nach den Figuren 2 und 5 Federzungen 26, 27 angeformt.

Gemäß einer Weiterbildung sind in den Nuten Schwellen 28 vorgesehen, damit die Streifen 13, 14 des Führungsschenkels nicht unabsichtlich in die Nuten 23, 24 eindringen können, falls das Spannteil ebenfalls unabsichtlich einmal entgegen der Kraft der Federzungen 26, 27 in die Befestigungsstellung gelangen sollte.

Ist der Geräteeinsatz 5 in den entsprechenden Ausschnitt der Tragplatte 18 eingesetzt, was in Fig. 3 dargestellt ist, wird das Spannteil 11 mit seinem Spannschenkel 15 über die Tragplatte 18 geschoben und die Schraube 9 bis zum Erreichen eines festen Sitzes eingeschraubt. Aus Fig. 3 ist leicht erkennbar, daß die dargestellte Befestigungsvorrichtung einen großen Spannbereich aufweist, da im Raum zwischen der Randleiste 4 und der Tragplatte 18 die Schraube 9 wesentlich weiter nach unten reichen kann, als es rechts von der Randleiste 4 der Fall wäre.

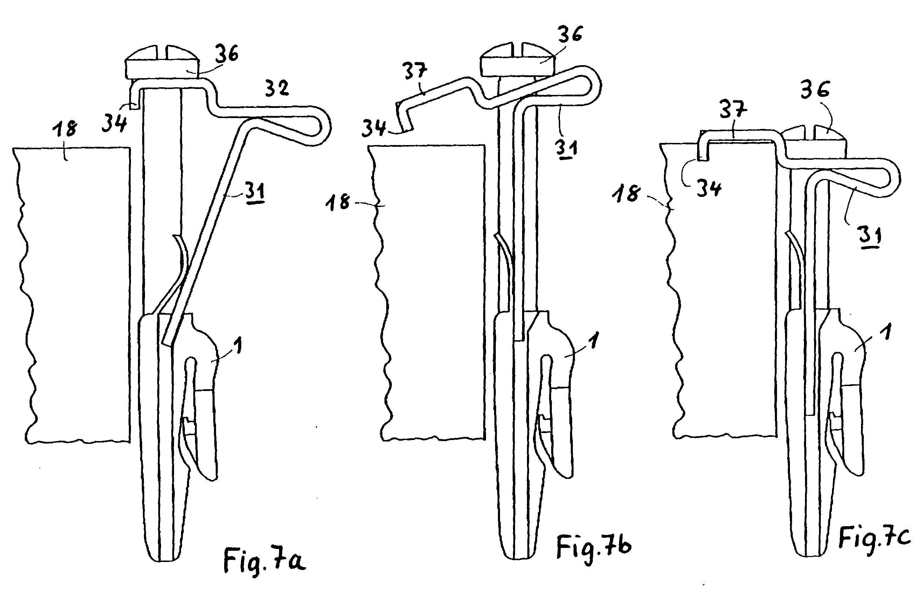

Fig. 6 zeigt ein weiteres Ausführungsbeispiel für ein Spannteil 31, bei welchem der Führungsschenkel mit seinen beiden Streifen 13, 14 wie der Führungsschenkel des Spannteils nach Fig. 4 ausgebildet ist. Der Spannschenkel 32 ist jedoch bei 33 gekröpft und weist rechtwinklig nach unten gebogene Krallen 34, 35 auf. Außerdem ist der Winkel zwischen dem Spannschenkel 32 und dem Führungsschenkel 13, 14 etwa kleiner als 90°.

Durch diese Maßnahmen wird ein Abrutschen des Spannschenkels von der Oberfläche der Tragplatte beim Festziehen der Spannschraube verhindert. Dieses wird im folgenden unter Bezugnahme auf Fig. 7 näher erläutert, die eine erfindungsgemäße Befestigungsvorrichtung am Rand einer Tragplatte 18 in drei verschiedenen Phasen zeigt.

In Fig. 7a befindet sich das Spannteil 31 der Befestigungsvorrichtung in der Transportlage. Bei der Darstellung nach Fig. 7b ist das Spannteil 31 in die Befestigungslage gekippt. Aus dieser Stellung heraus wird die Schraube 36, die bei diesem Ausführungsbeispiel nicht als Senkschraube ausgeführt ist, in die Bohrung im Halteteil 1 hineingedreht. Bei der Darstellung nach Fig. 7c ist die Befestigungsvorrichtung mit der Tragplatte 18 verspannt und der Befestigungsvorgang beendet.

Mit dem Erreichen der in Fig. 7c dargestellten Stellung verlagert sich der Ansatzpunkt der von der Schraube 36 auf den Spannschenkel 32 wirkenden Kraft in Richtung auf die Tragplatte 18. Gleichzeitig liegt der Teil 37 des Spannschenkels, der sich zwischen der Kröpfung und den Krallen 34 befindet, auf der Oberfläche der Tragplatte 18 auf. Dadurch verkleinert sich der Hebelarm, der für eine weitere Verformung des Spannteils 31 maßgebend ist, wesentlich, so daß trotz festem Anziehen der Schraube 36 das Spannteil 31 die in Fig. 7c dargestellte Form beibehält.

## Patentansprüche

1. Befestigungsvorrichtung für einen Geräteeinsatz, der in die Einbauöffnung einer Tragplatte (18) einsetzbar ist, mit seinem Rand auf deren Oberfläche aufliegt und der zur Arretierung einer Vielzahl der genannten Befestigungsvorrichtungen ausgebildet ist, wobei die Befestigungsvorrichtung aus einem mit dem Geräteeinsatz verbindbaren Halteteil (1) und einem Spannteil (11, 31) besteht, das von einer Transportlage in eine Befestigungslage kippbar ist und aus einem Führungsschenkel (13, 14) und einem dazu im wesentlichen senkrecht angeordneten Spannschenkel (15, 16) besteht, wobei der Spannschenkel mittels einer durch ein Loch (12) im Spannschenkel greifenden und in einer Gewindebohrung (8) im Halteteil gehaltenen Schraube mit der Tragplatte (18) verspannbar ist und der Führungsschenkel (13, 14) von zwei Streifen gebildet wird, die zu beiden Seiten der Gewindebohrung im Halteteil geführt sind, dadurch gekennzeichnet, daß das Spannteil (11, 31) im wesentlichen T-förmig gebogen ist, daß der Führungsschenkel (13, 14) in der Befestigungslage in seiner gesamten Länge parallel zur Schraube (9) verläuft und daß das Spannteil (11, 31) im Übergangsbereich zwischen dem Spannschenkel (15) und dem Führungsschenkel (13, 14) eine Biegung (21) von etwa 90° und eine Biegung (22) von etwa 180° aufweist.

2. Befestigungsvorrichtung nach Anspruch 1 für einen Geräteeinsatz, der eine in die Einbauöffnung ragende umlaufende Randleiste (4) zur Arretierung der Befestigungselemente aufweist, die im arretierten Zustand von zwei Schenkeln des Halteteils umfaßt wird, dadurch gekennzeichnet, daß die Gewindebohrung (8) in dem der Tragplatte (18) zugewandten Schenkel (2) des Halteteils (1) angeordnet ist.

3. Befestigungsvorrichtung nach einem der vorhergehenden Ansprüche, dadurch gekennzeichnet, daß das Loch im Spannschenkel (15) ein Langloch (10) ist, daß Nuten (23, 24), die zur Führung der Streifen (13, 14) im Halteteil (1) angeordnet sind, an ihren vom Geräteeinsatz (5) abgewandten Enden mit jeweils einer von der Tragplatte (18) wegweisenden Aufweitung (25) versehen sind und daß gegenüber der Aufweitung (25) mindestens einer der Nuten (23, 24) eine Federzunge (26, 27) vorgesehen ist, welche das Spannteil (11, 31) in der Transportlage hält.

4. Befestigungsvorrichtung nach Anspruch 3, dadurch gekennzeichnet, daß im Übergangsbereich zwischen der Nut (23, 24) und der Aufweitung (25) jeweils eine Schwelle (28) am Boden der Nut (23, 24) vorgesehen ist.

5. Befestigungsvorrichtung nach einem der Ansprüche 3 oder 4, dadurch gekennzeichnet, daß das Langloch (10) im Spannschenkel (15) in der Verlängerung des Führungsschenkels (13, 14) angesenkt ist.

6. Befestigungsvorrichtung nach einem der vorhergehenden Ansprüche, dadurch gekennzeichnet, daß der Spannschenkel (15) in einem mittleren Längenbereich (16) gegen die Tragplatte (18) abgewinkelt ist.

7. Befestigungsvorrichtung nach einem der Ansprüche 1 bis 5, dadurch gekennzeichnet, daß der Spannschenkel (32) am Rande eines gegenüber dem Führungsschenkel (13, 14) liegenden Bereichs von dem Führungsschenkel (13, 14) wegweisend gekröpft ist und am Ende Krallen (34, 35) aufweist.

8. Befestigungsvorrichtung nach Anspruch 7, dadurch gekennzeichnet, daß der Spannschenkel (32) mit dem Führungsschenkel (13, 14) im entspannten Zustand einen Winkel zwischen 70° und 85° bildet.

9. Befestigungsvorrichtung nach einem der Ansprüche 7 oder 8, dadurch gekennzeichnet, daß die Krallen (34, 35) rechtwinklig zum Spannschenkel (32) stehen.

## Claims

1. Fastening device for a built-in appliance which is adapted to be inserted into the installation opening of a worktop (18), rests by its edge on the surface of the latter and is configured so as to lock a plurality of said fastening devices, the fastening device being made up of a retaining element (1) which is adapted to be joined to the built-in appliance, and a tensioning element (11, 31) which is adapted to be tilted from a transport position into a fastening position, and of a guiding leg (13, 14) and a tensioning leg (15, 16) which is disposed substantially perpendicular to the latter, the tensioning leg being adapted to be braced with the worktop (18) by means of a screw which engages through a hole (12) in the tensioning leg and is held in a threaded bore (8) in the retaining element, and the guiding leg (13, 14) being consituted by two strips which are guided in the retaining element on both sides of the threaded bore,
characterised in that the tensioning element (11, 31) is substantially bent into the shape of a T, that in the fastening position the guiding leg (13, 14) runs for its entire length parallel to the screw (9), and that in the transition zone between the tensioning leg (15) and the guiding leg (13, 14) the tensioning element (11, 31) incorporates a bend (21) of approximately 90° and a bend (22) of approximately 180°.

2. Fastening device according to claim 1 for a built-in appliance which incorporates an all-round edging strip (4) which juts into the installation opening in order to lock the fastening elements and which in the locked state is encompassed by two legs of the retaining element, characterised in that the threaded bore (8) is disposed in the leg (2) of the retaining element (1) nearest the worktop (18).

3. Fastening device according to either of the preceding claims, characterised in that the hole in the tensioning leg (15) is an elongate hole (10), that slots (23, 24) which are disposed in the retaining element (1) to guide the strips (13, 14) are provided on their ends remote from the built-in appliance (5) with a respective widened area (25) facing away from the worktop (18) and that opposite the widened area (25) of at least one of the slots (23, 24) is a flexible tab (26, 27) which holds the tensioning element (11, 31) in the transport position.

4. Fastening device according to claim 3, characterised in that in the transition zone between the slot (23, 24) and the widened area (25) there is provided a respective sill (28) on the floor of the slot (23, 24).

5. Fastening device according to either of claims 3 and 4, characterised in that the elongate hole (10) in the tensioning leg (15) is countersunk in the extension of the guiding leg (13, 14).

6. Fastening device according to any of the preceding claims, characterised in that the tensioning leg (15) is bent at an angle in a central longitudinal region (16) with respect to the worktop (18).

7. Fastening device according to any of claims 1 to 5, characterised in that at the edge of a zone situated opposite the guiding leg (13, 14), the tensioning leg (32) is swan-necked facing away from the guiding leg (13, 14) and incorporates claws (34, 35) on the end.

8. Fastening device according to claim 7, characterised in that in the relaxed state the tensioning leg (32) forms an angle of between 70° and 85° with the guiding leg (13, 14).

9. Fastening device according to either of claims 7 and 8, characterised in that the claws (34, 35) are situated at right angles to the tensioning leg (32).

## Revendications

1. Dispositif pour fixer un appareil qui peut s'encastrer dans l'ouverture d'encastrement d'un panneau support (18), repose, par son bord, sur la surface du panneau support et qui est conçu pour le blocage d'une pluralité des dispositifs de fixation mentionnés, dans lequel le dispositif de fixation est constitué d'une pièce de maintien (1) qui peut se relier à l'appareil et d'une pièce de bridage (11, 31) qui peut basculer pour passer d'une position de transport à une position de fixation et qui est constituée d'une branche de guidage (13, 14) et d'une branche de serrage (15, 16) qui lui est disposée sensiblement perpendiculairement, dans lequel la branche de bridage peut se brider avec le panneau support (18) au moyen d'une vis qui passe par un trou (12) prévu dans la branche de bridage et qui est maintenue dans un taraudage (8) prévu dans la pièce de maintien et dans lequel la branche de guidage (13, 14) est formée de deux languettes qui sont guidées des deux côtés du taraudage prévu dans la pièce de maintien, caractérisé par le fait que la pièce de bridage (11, 31) est sensiblement cintrée en forme de T, qu'en position de fixation la branche de guidage (13, 14) est orientée, dans toute sa longueur parallèlement à la vis (9) et que la pièce de bridage (11, 31) présente, dans la zone de transition, entre la branche de bridage (15) et la branche de guidage (13, 14), un cintrage (21) d'environ 90° et un cintrage (22) d'environ 180°.

2. Dispositif de fixation selon la revendication 1 pour un appareil qui présente un tasseau de bordure périphérique (4), pénétrant dans l'ouverture d'encastrement, pour le blocage des éléments de fixation, qui, à l'état bloqué, est enserré par deux branches de la pièce de maintien, caractérisé par le fait que le taraudage (8) est disposé dans la branche (2) de la pièce de maintien (1) dirigée vers le panneau support (18).

3. Dispositif de fixation selon l'une des revendications précédentes, caractérisé par le fait que le trou dans la branche de bridage (15) est une lumière (10), que des rainures (23, 24), qui sont disposées pour le guidage des languettes (13, 14) dans la pièce de maintien (1), présentent chacune, à leurs extrémités opposées à l'appareil (5), un élargissement (25) s'éloignant du panneau support (18) et qu'en face de l'élargissement (25) d'au moins une des rainures (23, 24) est prévue une lame élastique (26, 27) qui maintient la partie de bridage (11, 31) dans la position de transport.

4. Dispositif de fixation selon la revendication 3, caractérisé par le fait que dans la zone de transition entre la rainure (23, 24) et l'élargissement (25), un bossage (28) est chaque fois prévu au fond de la rainure (23, 24).

5. Dispositif de fixation selon l'une des revendications 3 ou 4, caractérisé par le fait que la lumière (10) prévue dans la branche de bridage (15) est fraisée dans le prolongement de la branche de guidage (13, 14).

6. Dispositif de fixation selon l'une des revendications précédentes, caractérisé par le fait que la branche de bridage (15) forme, dans une zone longitudinale médiane (16), un angle en direction du panneau support (18).

7. Dispositif de fixation selon l'une des revendications 1 à 5, caractérisé par le fait qu'en bordure d'une zone située en face de la branche de guidage (13, 14), la branche de bridage (32) est contre-coudée en s'éloignant de la branche de guidage (13, 14) et présente à l'extrémité des griffes (34, 35).

8. Dispositif de fixation selon la revendication 7, caractérisé par le fait qu'à l'état non bridé, la branche de bridage (32) forme avec la branche de guidage (13, 14) un angle valant entre 70° et 85°.

9. Dispositif de fixation selon l'une des revendications 7 ou 8, caractérisé par le fait que les griffes (34, 35) sont perpendiculaires à la branche de bridage (32).
